# EUROPEAN PATENT APPLICATION

(11) **EP 4 336 953 A1**
(43) Date of publication of application: **13.03.2024**
(21) Application number: 21939709.8
(22) Date of filing: 07.05.2021
(51) Int. Cl.: H04W 76/18, H04W 88/04

(54) **ACCESS FAILURE PROCESSING METHOD AND APPARATUS, TERMINAL DEVICE AND STORAGE MEDIUM**

(71) Applicant: Beijing Xiaomi Mobile Software Co., Ltd., Beijing 100085 (CN)
(72) Inventor: YANG, Xing, Beijing 100085 (CN)
(74) Representative: dompatent von Kreisler Selting Werner - Partnerschaft von Patent- und Rechtsanwälten mbB
(86) International application number: PCT/CN2021/092236
(87) International publication number: WO 2022/233063

(57) **Abstract**

Disclosed in the embodiments of the present application are an access failure processing method and apparatus, a terminal device and a storage medium, which can be applied to a 5G/NR system. The method comprises: after access failure occurs in a relay terminal device, the relay terminal device sending a notification message to a remote terminal device, such that the remote terminal device can understand from the notification that the access failure occurs in the relay terminal device corresponding thereto, so that the remote terminal device can perform a corresponding operation on the basis of the notification, so as to cope with the access failure of the relay terminal device, for example, the remote terminal device prohibits access within a certain period of time after receiving the notification, e.g., no longer repeatedly sending an access request to the relay terminal device within the period of time, and thus unnecessary access attempts can be avoided, thereby being beneficial for saving on resources and avoiding the wasting of the resources.

## Description

### TECHNICAL FIELD

The present disclosure relates to the field of communication technologies, and in particular to an access failure processing method and apparatus, a terminal device and a storage medium.

### BACKGROUND

In order to support direct communication between a user equipment (UE) and another UE, a sidelink communication mode has been introduced, and an interface between the UE and the another UE is a PC5 port. According to the correspondence relationship between the sending UE and the receiving UE, three transmission modes are supported on the sidelink, and the three transmission modes are unicast, multicast, and broadcast.

A UE may communicate with a base station via a relay of another UE without directly connecting to the base station. The UE that is not connected to the base station is called a remote UE, and the UE that provides a relay function is called a relay UE. The communication between the remote UE and the relay UE is achieved through the sidelink. When the relay UE communicates with the remote UE, if an access failure occurs to the relay UE, the connection establishment request of the remote UE cannot be sent, and the remote UE cannot establish a connection through this relay, resulting in the remote UE being unable to communicate with the base station. However, there is currently a lack of effective means to handle the access failure of the relay UE.

### SUMMARY

Embodiments of the present disclosure provide an access failure processing method and apparatus, a terminal device and a storage medium, which can be applied to a 5G system or a new radio (NR) system. Through notifying the remote terminal device by the relay terminal device when an access failure occurs to the relay terminal device, the remote terminal device can know based on the notification that the access failure has occurred to the corresponding relay terminal device. Based on the notification, the remote terminal device can perform corresponding operations to cope with the access failure of the relay terminal device, for example, the remote terminal device is prohibited from accessing the relay terminal device for a certain period of time after receiving the notification, for example, the remote terminal device no longer repeatedly sends an access request to the relay terminal device within the period of time, so that unnecessary access attempts may be avoided, thereby contributing to saving resources and avoiding waste of resources.

In a first aspect, the embodiments of the present disclosure provide an access failure processing method that is applied to a relay terminal device. The access failure processing method includes sending a notification message to a remote terminal device in response to an access failure of the relay terminal device.

In an implementation, access operation of the relay terminal device is performed in response to a trigger of a radio resource control (RRC) connection establishment of the remote terminal device, an RRC connection resume of the remote terminal device, or an RRC connection reestablishment of the remote terminal device.

Optionally, the access failure includes:
failing to pass a unified access control (UAC) verification;
receiving an RRC reject message sent by a network device; or
receiving an RRC release message sent by the network device, where the RRC release message carries a wait timer.

In an implementation, the sending the notification message to the remote terminal device in response to the access failure of the relay terminal device includes: in response to the access failure of the relay terminal device, starting a timer and sending the notification message to the remote terminal device.

In a possible implementation, the notification message carries a duration of the timer.

Optionally, the access failure is failing to pass a UAC verification, and the timer is a prohibit timer; or the access failure is receiving an RRC reject message or an RRC release message sent by a network device, and the timer is a T302 timer.

In a possible implementation, the access failure processing method further includes:
determining whether a connection request sent by another remote terminal device is received during operation of the timer; and
sending, in response to the connection request sent by the another remote terminal device being received during the operation of the timer, the notification message to the another remote terminal device.

Optionally, the determining whether the connection request sent by the another remote terminal device is received during the operation of the timer includes:
determining, in response to receiving data sent by the another remote terminal device during the operation of the timer, whether the data sent by the another remote terminal device is from a specific bearer; and
determining, in response to the data sent by the another remote terminal device being from the specific bearer, that the connection request sent by the another remote terminal device is received during the operation of the timer.

In a second aspect, the embodiments of the present disclosure provide another access failure processing method that is applied to a remote terminal device. The access failure processing method includes receiving a notification message sent by a relay terminal device. The notification message is sent by the relay terminal device when the relay terminal device performs access operation and an access failure occurs to the relay terminal device, or the notification message is sent by the relay terminal device when the relay terminal device receives during operation of a timer a connection request sent by the remote terminal device.

In a possible implementation, before the receiving the notification message sent by the relay terminal device, the method further includes sending to the relay terminal device an RRC establishment request message, an RRC resume request message, or an RRC reestablishment request message.

Optionally, the access failure processing method further includes performing, after receiving the notification message, one or more of:
entering into RRC establishment failure processing in response to the RRC establishment request message sent by the remote terminal device;
entering into RRC resume failure processing in response to the RRC resume request message sent by the remote terminal device;
reestablishing all established bearer radio link layer control (RLC);
notifying, in response to an RRC connection establishment being requested by a higher layer, the higher layer that access is prohibited;
notifying, in response to a process initiated by the remote terminal device being an RRC establishment process, the higher layer of a connection establishment failure;
discarding, in response to a process initiated by the remote terminal device being an RRC resume process, all secret keys for communication with a network device;
notifying, in response to a process initiated by the remote terminal device being the RRC resume process and the resume being triggered by the higher layer, the higher layer of a connection resume failure;
setting, in response to a process initiated by the remote terminal device being the RRC resume process and the resume being triggered by updating of a radio access network notification area (RNA), a delay for updating the RNA to be true; or
performing relay terminal device reselection.

In an implementation, the notifying the higher layer that the access is prohibited includes notifying the higher layer that access of all access categories is prohibited, or notifying the higher layer that access of all access categories other than access categories 0 and 2 is prohibited.

In a possible implementation, the access failure processing method further includes determining, after receiving the notification message, whether configuration for a duration of a timer exists, and starting the timer in response to the configuration for the duration of the timer existing.

In an implementation, after starting the timer, the remote terminal device performs one or more of
prohibiting access during operation time of the timer;
prohibiting access to a cell via the relay terminal device during the operation time of the timer; or
prohibiting selecting the relay terminal device during the operation time of the timer.

Optionally, the prohibiting the access to the cell via the relay terminal device during the operation time of the timer includes:
prohibiting sending, to the relay terminal device during the operation time of the timer, an RRC establishment request message and/or an RRC resume request message; or
prohibiting sending, to the relay terminal device during the operation time of the timer, a message of a specific bearer.

In a possible implementation, the duration of the timer is carried in the notification message, or is configured by a network device, or is configured by the relay terminal device, or is specified by a protocol.

In a third aspect, the embodiments of the present disclosure provide an access failure processing apparatus. The access failure processing apparatus has some or all of the functions of the relay terminal device in the method described in the first aspect above. For example, the access failure processing apparatus may have the function in some or all of the embodiments of the present disclosure, or may have the function of implementing any one of the embodiments of the present disclosure separately. The described functions may be implemented by hardware or by executing corresponding software through hardware. The hardware or software includes one or more units or modules corresponding to the above functions.

In an implementation, the access failure processing apparatus may include a transceiver module and a processing module. The processing module is configured to support the access failure processing apparatus in executing the corresponding functions in the above method. The transceiver module is configured to support communication between the access failure processing apparatus and other devices. The access failure processing apparatus may further include a storage module. The storage module is configured to couple with the transceiver module and processing module, and stores necessary computer programs and data of the access failure processing apparatus.

As an example, the processing module may be a processor, the transceiver module may be a transceiver or communication interface, and the storage module may be a memory.

In a fourth aspect, the embodiments of the present disclosure provide another access failure processing apparatus. The access failure processing apparatus has some or all of the functions of the remote terminal device in the method embodiments described in the second aspect above. For example, the access failure processing apparatus may have the function in some or all of the embodiments of the present disclosure, or may have the function of implementing any one of the embodiments of the present disclosure separately. The functions described may be implemented by hardware or by executing corresponding software through hardware. The hardware or software includes one or more units or modules corresponding to the above functions.

In an implementation, the access failure processing apparatus may include a transceiver module and a processing module. The processing module is configured to support the access failure processing apparatus in executing the corresponding functions in the above method. The transceiver module is configured to support communication between the access failure processing apparatus and other devices. The access failure processing apparatus may further include a storage module. The storage module is configured to couple with the transceiver module and processing module, and stores necessary computer programs and data of the access failure processing apparatus.

As an example, the processing module may be a processor, the transceiver module may be a transceiver or communication interface, and the storage module may be a memory.

In a fifth aspect, the embodiments of the present disclosure provide a terminal device. The terminal device includes a processor. The method described in the first aspect above is executed when the processor invokes a computer program in a memory.

In a sixth aspect, the embodiments of the present disclosure provide a terminal device. The terminal device includes a processor. The method described in the second aspect above is executed when the processor invokes a computer program in a memory.

In a seventh aspect, the embodiments of the present disclosure provide a terminal device. The terminal device includes a processor and a memory. The memory stores a computer program. The processor executes the computer program stored in the memory to cause the terminal device to perform the method described in the first aspect above.

In an eighth aspect, the embodiments of the present disclosure provide a terminal device. The terminal device includes a processor and a memory. The memory stores a computer program. The processor executes the computer program stored in the memory to cause the terminal device to perform the method described in the second aspect above.

In a ninth aspect, the embodiments of the present disclosure provide a terminal device. The terminal device includes a processor and an interface circuit. The interface circuit is used for receiving a code instruction and transmitting the code instruction to the processor. The processor is configured to run the code instruction to cause the terminal device to perform the method described in the first aspect above.

In a tenth aspect, the embodiments of the present disclosure provide a terminal device. The terminal device includes a processor and an interface circuit. The interface circuit is used for receiving a code instruction and transmitting the code instruction to the processor. The processor is configured to run the code instruction to cause the terminal device to perform the method described in the second aspect above.

In an eleventh aspect, the embodiments of the present disclosure provide a communication system. The communication system includes an access failure processing apparatus described in the third aspect and an access failure processing apparatus described in the fourth aspect, or the communication system includes a terminal device described in the fifth aspect and a terminal device described in the sixth aspect, or the communication system includes a terminal device described in the seventh aspect and a terminal device described in the eighth aspect, or the communication system includes a terminal device described in the ninth aspect and a terminal device described in the tenth aspect.

In a twelfth aspect, the embodiments of the present disclosure provide a computer-readable storage medium. The computer-readable storage medium is used for storing an instruction for use by the relay terminal device described above. When the instruction is executed, the relay terminal device is caused to perform the method described in the first aspect above.

In a thirteenth aspect, the embodiments of the present disclosure provide a readable storage medium. The readable storage medium is used for storing an instruction for use by the remote terminal device. When the instruction is executed, the remote terminal device is caused to perform the method described in the second aspect above.

In a fourteenth aspect, the present disclosure further provides a computer program product that includes a computer program. When the computer program is run on a computer, the computer is caused to perform the method described in the first aspect above.

In a fifteenth aspect, the present disclosure further provides a computer program product that includes a computer program. When the computer program is run on a computer, the computer is caused to perform the method described in the second aspect above.

In a sixteenth aspect, the present disclosure provides a computer program. When the computer program is run on a computer, the computer is caused to perform the method described in the first aspect above.

In a seventeenth aspect, the present disclosure provides a computer program. When the computer program is run on a computer, the computer is caused to perform the method described in the second aspect above.

The technical solutions of the embodiments of the present disclosure include at least the following beneficial effect. The remote terminal device can know, based on the notification sent by the relay terminal device, that an access failure has occurred to the corresponding relay terminal device. Based on the notification, the remote terminal device can perform corresponding operations to cope with the access failure of the relay terminal device, for example, the remote terminal device is prohibited from accessing the relay terminal device for a certain period of time after receiving the notification, for example, the remote terminal device no longer repeatedly sends an access request to the relay terminal device within the period of time, so that unnecessary access attempts may be avoided, thereby contributing to saving resources and avoiding waste of resources. In addition, when the relay terminal device receives the connection request sent from another remote terminal device during the operation of the timer, the notification message can be directly sent to the another remote terminal device to inform the another remote terminal device that the relay terminal device has failed to access at this time, thereby shortening the wait time of the another remote terminal device and improving the access efficiency.

### BRIEF DESCRIPTION OF THE DRAWINGS

In order to more clearly illustrate the technical solutions in the embodiments of the present disclosure or the background, the accompanying drawings to be used in the embodiments of the present disclosure or the background are described below.
FIG. 1 is a schematic diagram of a UE in an idle state establishing an RRC connection through a connection establishment process.
FIG. 2a, FIG. 2b and FIG. 2c are schematic diagrams of a UE in an inactive state resuming an RRC connection through a connection resume process.
FIG. 3 is a schematic diagram of an architecture of a communication system provided by an embodiment of the present disclosure.
FIG. 4 is a flowchart of an access failure processing method provided by an embodiment of the present disclosure.
FIG. 5 is a flowchart of another access failure processing method provided by an embodiment of the present disclosure.
FIG. 6 is a flowchart of yet another access failure processing method provided by an embodiment of the present disclosure.
FIG. 7 is a flowchart of an access failure processing method provided by an embodiment of the present disclosure.
FIG. 8 is a schematic structural diagram of an access failure processing apparatus provided by an embodiment of the present disclosure.
FIG. 9 is a schematic structural diagram of another access failure processing apparatus provided by an embodiment of the present disclosure.
FIG. 10 is a schematic structural diagram of yet another access failure processing apparatus provided by an embodiment of the present disclosure.
FIG. 11 is a schematic structural diagram of another access failure processing apparatus provided by an embodiment of the present disclosure.
FIG. 12 is a schematic structural diagram of a terminal device provided by an embodiment of the present disclosure.

### DETAILED DESCRIPTION

The following is a detailed description of the embodiments of the present disclosure. Examples of the embodiments are shown in the accompanying drawings, where the same or similar reference numerals throughout represent the same or similar components or components with the same or similar functions. The embodiments described below with reference to the accompanying drawings are exemplary and intended to explain the present disclosure, but cannot be understood as limiting the present disclosure.

It should be illustrated that in order to support direct communication between a UE and another UE, a sidelink communication mode has been introduced, and an interface between the UE and the another UE is a PC5 port. According to the correspondence relationship between the sending UE and the receiving UE, three transmission modes are supported on the sidelink, and the three transmission modes are unicast, multicast, and broadcast.

A UE may communicate with a base station via a relay of another UE without directly connecting to the base station. The UE that is not connected to the base station is called a remote UE, and the UE that provides a relay function is called a relay UE. The communication between the remote UE and the relay UE is achieved through the sidelink. The relay UE and the remote UE may be in a radio resource control (RRC) idle or inactive state. When the remote UE has data to be relayed, the remote UE may trigger the relay UE to establish an RRC connection and enter the RRC connection state.

When a UE has a new access request, a unified access control (UAC) verification needs to be performed. The verification method is to select an access probability based on the access category and access identity corresponding to this access request service, and generate a random number between 0 and 1. If the random number is lower than the access probability, the verification is passed and an access attempt may be initiated. If the random number is higher than the access probability, the verification is not passed and the UE starts a prohibit timer. During operation of the inhibit timer, access is prohibited. The UE may find, based on the access category and access identifier, the corresponding access probability and duration of the prohibit timer, and this configuration is sent by broadcasting. It should be noted that, if there is a new access request, the UE in all states needs to perform the UAC verification.

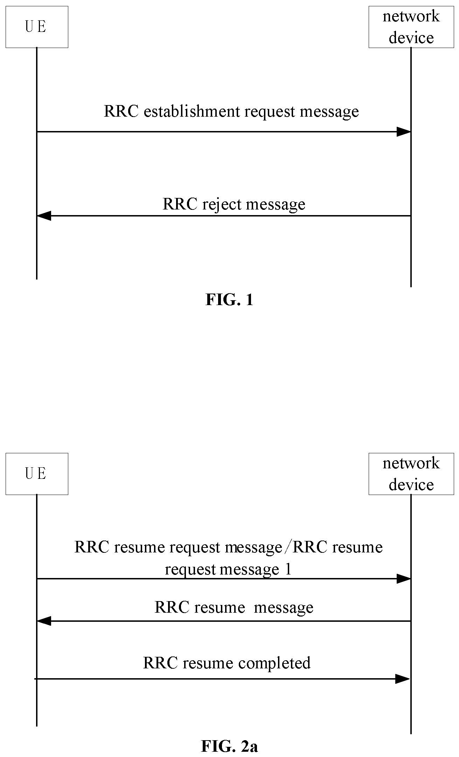

The UE in the idle state may establish an RRC connection through a connection establishment process, thus entering the connection state. The process is shown in FIG. 1. The UE needs to send an RRC establishment request message to the base station, and the RRC establishment request message carries a cause for the connection establishment. This cause may include an emergency call, high priority access, user initiated data, user initiated voice, a user initiated video call, user initiated signaling, paging, etc. The base station determines, based on the cause for the initiation, whether to allow the UE to establish a connection. If the UE is allowed to establish the connection, the base station sends an RRC connection message to the UE, allowing the UE to enter the connection state. If the UE is not allowed to establish the connection, the base station sends an RRC reject message to the UE, keeping the UE in the idle state.

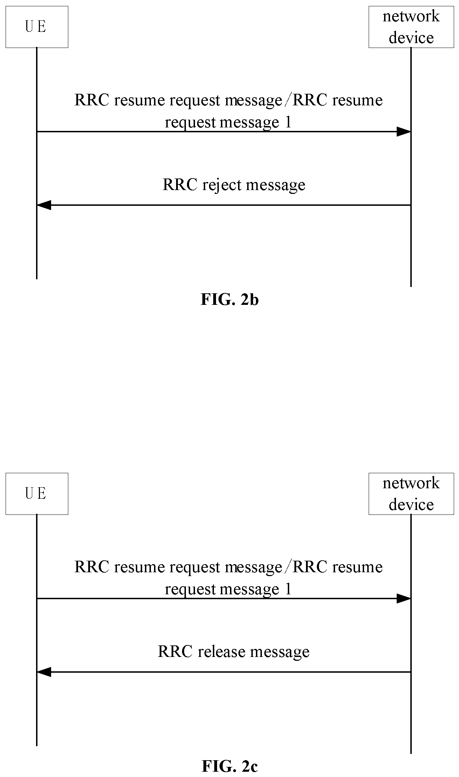

The UE in the inactive state may resume an RRC connection through a connection resume process, thus entering the connection state. The process is shown in FIGS. 2a-2c. The UE needs to send an RRC resume request message to the base station. The RRC resume request message carries a cause for the connection resume. The base station determines, based on the cause for the initiation, whether to allow the UE to resume a connection. If the UE is allowed to resume the connection, the base station sends an RRC resume message to the UE, allowing the UE to enter the connection state. If the UE is not allowed to resume the connection, the base station sends an RRC reject message to the UE, keeping the UE in the inactive state. The base station may also send an RRC release message to the UE, causing the UE to enter the idle state.

The RRC reject message may carry a wait time. After receiving the RRC reject message, the UE starts a T302 timer and prohibits access during the operation of the timer. The wait time may be carried in the RRC release message. After receiving the RRC release message, the UE starts the T302 timer and prohibits access during the operation of the timer.

When the connection establishment or connection resume of the relay UE is triggered by a connection establishment of the remote UE, a connection resume of the remote UE or a connection reestablishment of the remote UE, the relay UE needs to first perform a connection establishment or connection resume, and then forward the request of the remote UE. However, when an access failure occurs to the relay UE, the connection establishment request of the remote UE cannot be sent, and the remote UE cannot establish a connection via this relay, resulting in the remote UE being unable to communicate with the base station. However, there is currently a lack of effective means to handle the access failure of the relay UE.

For this purpose, the embodiments of the present disclosure provide an access failure processing method and apparatus, a terminal device, and a storage medium, which can be applied to a 5G system or a new radio (NR) system. Through notifying the remote terminal device by the relay terminal device when an access failure occurs to the relay terminal device, the remote terminal device can know based on the notification that the access failure has occurred to the corresponding relay terminal device. Based on the notification, the remote terminal device can perform corresponding operations to cope with the access failure of the relay terminal device, for example, the remote terminal device is prohibited from accessing the relay terminal device for a certain period of time after receiving the notification, for example, the remote terminal device no longer repeatedly sends an access request to the relay terminal device within the period of time, so that unnecessary access attempts may be avoided, thereby contributing to saving resources and avoiding waste of resources.

In order to better understand the access failure processing method disclosed in the embodiments of the present disclosure, a communication system used in the embodiments of the present disclosure is described below.

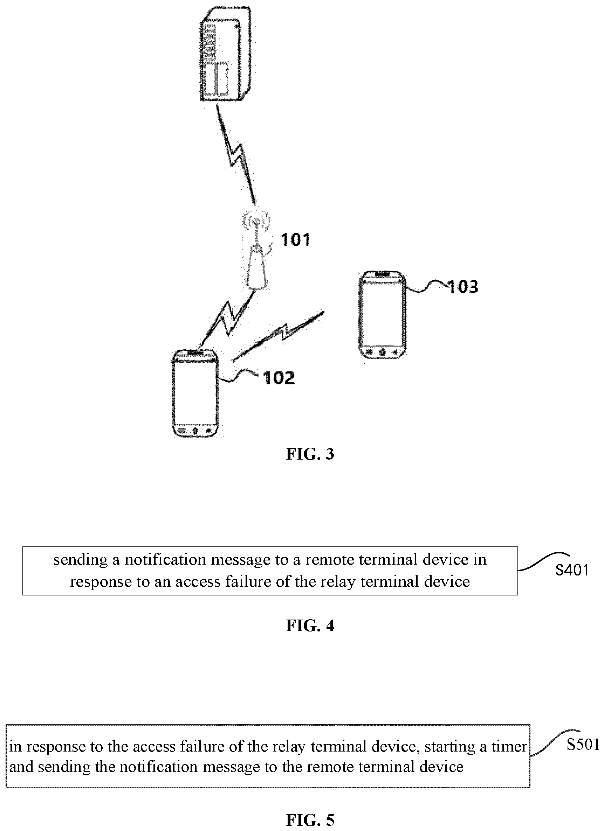

Referring to FIG. 3, FIG. 3 is a schematic diagram of an architecture of a communication system provided by an embodiment of the present disclosure. The communication system may include, but is not limited to, a network device and a plurality of terminal devices. A terminal device, among the plurality of terminal devices, that is not connected to the network device is called a remote terminal device, and a terminal device that provides a relay function is called a relay terminal device. The remote terminal device communicates with the relay terminal device through the side link. The number and form of devices shown in FIG. 3 are for example purposes only and do not constitute a limitation to the embodiments of the present disclosure. In practical applications, the communication system may include two or more network devices and two or more terminal devices. The communication system shown in FIG. 3 includes a network device 101, a relay terminal device 102, and a remote terminal device 103 as an example.

It should be illustrated that the technical solutions of the embodiments of the present disclosure may be applied to various communication systems, for example, long term evolution (LTE) systems, 5th generation (5G) mobile communication systems, 5G new radio (NR) systems, or other future new mobile communication systems.

The network device 101 in the embodiments of the present disclosure is an entity at the network side used for transmitting or receiving signals. For example, the network device 101 may be an evolved NodeB (eNB), a transmission reception point (TRP), a next generation NodeB (gNB) in NR systems, a base station in other future mobile communication systems, or an access node in wireless fidelity (WiFi) systems. The embodiments of the present disclosure do not limit the specific technology and device form adopted by the network device. The network device provided by the embodiments of the present disclosure may be composed of a central unit (CU) and a distributed unit (DU), where the CU may also be referred to as a control unit. The CU-DU structure may be used to separate the protocol layer of the network device such as the base station, with some protocol layer functions placed under centralized control in the CU, and the remaining or all protocol layer functions distributed in the DU, and the DU being centrally controlled by the CU.

The terminal device in the embodiments of the present disclosure (such as the relay terminal device 102 and the remote terminal device 103 mentioned above) is an entity at the user side used for receiving or transmitting signals, such as a mobile phone. The terminal device may also be referred to as a terminal, a user equipment (UE), a mobile station (MS), a mobile terminal device (MT), etc. The terminal devices may be a device with communication capabilities such as a car, a smart car, a mobile phone, a wearable device, or a pad; or the terminal device may be a computer with wireless transceiver capabilities, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, or a wireless terminal device in smart home. The embodiments of the present disclosure do not limit the specific technology and device form adopted by the terminal device.

It can be understood that the communication system described in the embodiments of the present disclosure is intended to provide a clearer explanation of the technical solutions of the embodiments of the present disclosure, and does not constitute a limitation to the technical solutions provided by the embodiments of the present disclosure. As those ordinary skilled in the art know, with the evolution of the system architecture and the emergence of new service scenarios, the technical solutions provided by the embodiments of the present disclosure are also applicable to similar technical problems.

The following is a detailed introduction to the access failure processing method and apparatus, a terminal device, and a storage medium provided by the present disclosure, in conjunction with the accompanying drawings.

Referring to FIG. 4, FIG. 4 is a flowchart of an access failure processing method provided by an embodiment of the present disclosure. It should be illustrated that the access failure processing method of the embodiment of the present disclosure may be applied to a relay terminal device. As shown in FIG. 4, the access failure processing method may include but is not limited to the following step S401.

At step S401, a notification message is sent to a remote terminal device in response to an access failure of the relay terminal device.

In an embodiment of the present disclosure, the access operation of the relay terminal device is performed in response to a trigger of an RRC connection establishment of the remote terminal device, an RRC connection resume of the remote terminal device, or an RRC connection reestablishment of the remote terminal device. That is to say, when the connection establishment or connection resume of the relay terminal device is triggered by the connection establishment, connection resume or connection reestablishment of the remote terminal device, the relay terminal device needs to first perform a connection establishment or resume, and then forward the request of the remote terminal device.

In an embodiment of the present disclosure, the above access failure may include, but is not limited to, failing to pass a unified access control (UAC) verification, receiving an RRC reject message sent by a network device, or receiving an RRC release message sent by the network device, etc. In this embodiment, the RRC release message carries a wait timer.

It should be illustrated that, when there is a new access request, the relay terminal device in all states (such as the idle state, the inactive state, etc.) needs to perform a UAC verification. The verification method is to select an access probability based on the access category and access identity corresponding to this access request service, and generate a random number between 0 and 1. If the random number is lower than the access probability, the verification is passed and an access attempt may be initiated to the network device. If the random number is higher than the access probability, the verification is not passed and the relay terminal device starts a prohibit timer. During operation of the inhibit timer, access is prohibited, and at this time it can be determined that an access failure occurs to the relay terminal device. The relay terminal device may find, based on the access category and access identifier, the corresponding access probability and duration of the prohibit timer, and this configuration is sent by broadcasting.

For example, the relay terminal device in the idle state may enter the connection state through receiving an RRC connection establishment sent by the remote terminal device. The relay terminal device in the idle state needs to send an RRC establishment request message to the network device (e.g., the base station), and the RRC establishment request message carries a cause for the connection establishment. This cause may include an emergency call, high priority access, user initiated data, user initiated voice, a user initiated video call, user initiated signaling, paging, etc. The network device determines, based on the cause for the initiation, whether to allow the relay terminal device to establish a connection. If the relay terminal device is allowed to establish the connection, the network device sends an RRC connection message to the relay terminal device, allowing the relay terminal device to enter the connection state. If the relay terminal device is not allowed to establish the connection, the network device sends an RRC reject message to the relay terminal device, keeping the relay terminal device in the idle state, and at this time it can be determined that an access failure occurs to the relay terminal device.

For another example, the relay terminal device in the inactive state may resume an RRC connection through a connection resume process, thus entering the connection state. The relay terminal device needs to send an RRC resume request message to the network device. The RRC resume request message carries a cause for the connection resume. The network device determines, based on the cause for the initiation, whether to allow the relay terminal device to resume a connection. If the relay terminal device is allowed to resume the connection, the network device sends an RRC resume message to the relay terminal device, allowing the relay terminal device to enter the connection state. If the relay terminal device is not allowed to resume the connection, the network device sends an RRC reject message to the relay terminal device, keeping the relay terminal device in the inactive state, and at this time it can be determined that an access failure occurs to the relay terminal device. The network device may also send an RRC release message to the relay terminal device, causing the relay terminal device to enter the idle state, and at this time it can be determined that an access failure occurs to the relay terminal device. The RRC reject message may carry a wait time. After receiving the RRC reject message, the UE starts a T302 timer and prohibits access during the operation of the timer. The wait time may be carried in the RRC release message. After receiving the RRC release message, the UE starts the T302 timer and prohibits access during the operation of the timer.

Through the embodiments of the present disclosure, the remote terminal device can know, based on the notification sent by the relay terminal device, that an access failure has occurred to the corresponding relay terminal device. Based on the notification, the remote terminal device can perform corresponding operations to cope with the access failure of the relay terminal device, for example, the remote terminal device is prohibited from accessing the relay terminal device for a certain period of time after receiving the notification, for example, the remote terminal device no longer repeatedly sends an access request to the relay terminal device within the period of time, so that unnecessary access attempts may be avoided, thereby contributing to saving resources and avoiding waste of resources.

It should be illustrated that the notification message sent by the relay terminal device to the remote terminal device carries a duration of a timer, which can enable the relay terminal device to start the timer after the access failure, thereby avoiding unnecessary access attempts and saving resources. Optionally, referring to FIG. 5, FIG. 5 is a flowchart of another access failure processing method provided by an embodiment of the present disclosure. It should be illustrated that the access failure processing method of the embodiment of the present disclosure may be applied to the relay terminal device. As shown in FIG. 5, the access failure processing method may include but is not limited to the following step S501.

At step S501, in response to the access failure of the relay terminal device, a timer is started and the notification message is sent to the remote terminal device.

In an embodiment of the present disclosure, the access operation of the relay terminal device is performed in response to a trigger of an RRC connection establishment of the remote terminal device, an RRC connection resume of the remote terminal device, or an RRC connection reestablishment of the remote terminal device. That is to say, when the connection establishment or connection resume of the relay terminal device is triggered by the connection establishment, connection resume or connection reestablishment of the remote terminal device, the relay terminal device needs to first perform a connection establishment or resume, and then forward the request of the remote UE.

In an embodiment of the present disclosure, the above access failure may include, but is not limited to, failing to pass a UAC verification, receiving an RRC reject message sent by a network device, or receiving an RRC release message sent by the network device, etc. In this embodiment, the RRC release message carries a wait timer.

It should be illustrated that, when there is a new access request, the relay terminal device in all states (such as the idle state, the inactive state, etc.) needs to perform a UAC verification. The verification method is to select an access probability based on the access category and access identity corresponding to this access request service, and generate a random number between 0 and 1. If the random number is lower than the access probability, the verification is passed and an access attempt may be initiated to the network device. If the random number is higher than the access probability, the verification is not passed and the relay terminal device starts a prohibit timer. During operation of the inhibit timer, access is prohibited, and at this time it can be determined that an access failure occurs to the relay terminal device. The relay terminal device may find, based on the access category and access identifier, the corresponding access probability and duration of the prohibit timer, and this configuration is sent by broadcasting.

For example, the relay terminal device in the idle state may enter the connection state through receiving an RRC connection establishment sent by the remote terminal device. The relay terminal device in the idle state needs to send an RRC establishment request message to the network device (e.g., the base station), and the RRC establishment request message carries a cause for the connection establishment. This cause may include an emergency call, high priority access, user initiated data, user initiated voice, a user initiated video call, user initiated signaling, paging, etc. The network device determines, based on the cause for the initiation, whether to allow the relay terminal device to establish a connection. If the relay terminal device is allowed to establish the connection, the network device sends an RRC connection message to the relay terminal device, allowing the relay terminal device to enter the connection state. If the relay terminal device is not allowed to establish the connection, the network device sends an RRC reject message to the relay terminal device, keeping the relay terminal device in the idle state, and at this time it can be determined that an access failure occurs to the relay terminal device.

For another example, the relay terminal device in the inactive state may resume an RRC connection through a connection resume process, thus entering the connection state. The relay terminal device needs to send an RRC resume request message to the network device. The RRC resume request message carries a cause for the connection resume. The network device determines, based on the cause for the initiation, whether to allow the relay terminal device to resume a connection. If the relay terminal device is allowed to resume the connection, the network device sends an RRC resume message to the relay terminal device, allowing the relay terminal device to enter the connection state. If the relay terminal device is not allowed to resume the connection, the network device sends an RRC reject message to the relay terminal device, keeping the relay terminal device in the inactive state, and at this time it can be determined that an access failure occurs to the relay terminal device. The network device may also send an RRC release message to the relay terminal device, causing the relay terminal device to enter the idle state, and at this time it can be determined that an access failure occurs to the relay terminal device. The RRC reject message may carry a wait time. After receiving the RRC reject message, the relay terminal device starts a T302 timer and prohibits access during the operation of the timer. The wait time may be carried in the RRC release message. After receiving the RRC release message, the relay terminal device starts the T302 timer and prohibits access during the operation of the timer.

Optionally, when an access failure occurs to the relay terminal device, the relay terminal device may start the timer and send the notification message to the remote terminal device, and the notification message carries a duration of the timer. Due to different reasons for the access failure, timers started by the relay terminal device may also be different. For example, the timer may be a prohibit timer, or the timer may be a T302 timer. As an example, when the access failure is failing to pass a UAC verification, the timer is a prohibit timer. As another example, when the access failure is receiving an RRC reject message or an RRC release message sent by a network device, the timer is a T302 timer.

That is to say, when the relay terminal device has a new access request and has not passed the UAC verification, the relay terminal device starts the prohibit timer and sends the notification message to the remote terminal device. The notification message carries the duration of the prohibit timer. In addition, the relay terminal device is prohibited to be accessed during the operation of the prohibit timer. When the access failure of the relay terminal device caused by receiving the RRC reject message or RRC release message sent by the network device, the T302 timer may be started and the notification message may be sent to the remote terminal device, and the notification message carries the duration of the T302 timer. The relay terminal device is prohibited to be accessed during the operation of the T302 timer.

By implementing the embodiments of the present disclosure, it is possible to carry a duration of a timer in the notification message sent by the relay terminal device to the remote terminal device, which can enable the relay terminal device to start the timer after the access failure, thereby avoiding unnecessary access attempts and saving resources.

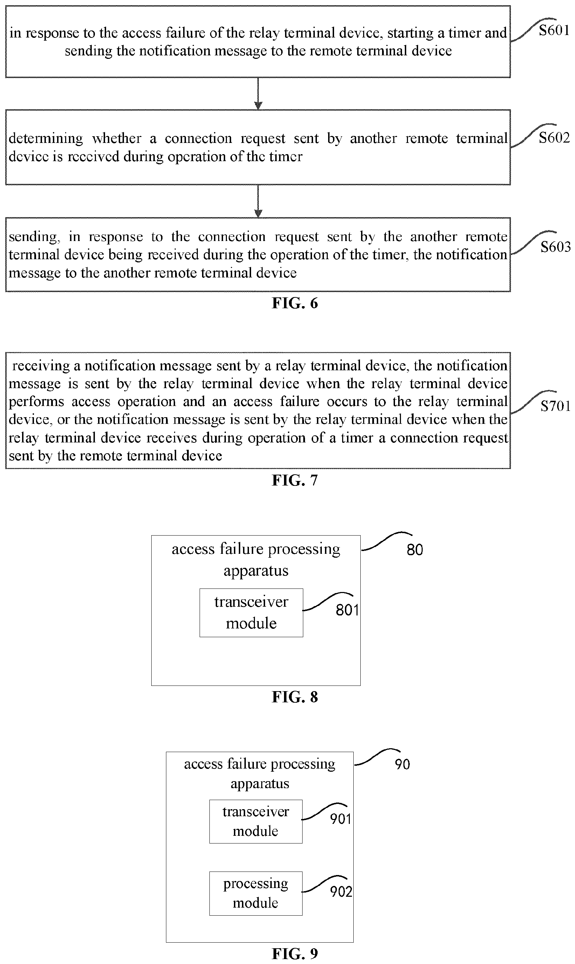

Referring to FIG. 6, FIG. 6 is a flowchart of yet another access failure processing method provided by an embodiment of the present disclosure. It should be illustrated that the access failure processing method of the embodiment of the present disclosure may be applied to the relay terminal device. As shown in FIG. 6, the access failure processing method may include but is not limited to the following steps S601 to S603.

At step S601, in response to the access failure of the relay terminal device, a timer is started and the notification message is sent to the remote terminal device. In this embodiment, the notification message carries a duration of the timer.

In an embodiment of the present disclosure, the step S601 may be implemented in any manner in various embodiments of the present disclosure, and the embodiments of the present disclosure do not limit or elaborate on this.

At step S602, it is determined whether a connection request sent by another remote terminal device is received during operation of the timer.

Optionally, the relay terminal device needs to determine whether the connection request sent by another remote terminal device is received during the operation of the prohibit timer or T302 timer. The operation of the prohibit timer is triggered by the UAC access verification failure. The operation of the T302 timer is triggered by receiving the RRC reject message or RRC release message.

In an implementation, in response to receiving data sent by the another remote terminal device during the operation of the timer, it is determined whether the data sent by the another remote terminal device is from a specific bearer; and in response to the data sent by the another remote terminal device being from the specific bearer, it is determined that the connection request sent by the another remote terminal device is received during the operation of the timer.

That is to say, when the relay terminal device receives the data from another remote terminal device during the operation of the prohibit timer or T302 timer, the relay terminal device determines whether the data sent by the another remote terminal device is from the specific carrier. When the data sent by the another remote terminal device is from the specific carrier, the relay terminal device determines that it receives the connection request sent from another remote terminal device during the operation of the timer. The specific bearer may be understood as used for carrying the RRC message, which means that the RRC message needs to be sent on the specific bearer. Therefore, it can be determined whether the data sent by another remote terminal device is the connection request by determining whether the data sent by the another remote terminal device is from the specific bearer.

Optionally, when the relay remote terminal device determines that the data sent by another remote terminal device is not from the specific carrier, it can be determined that the data sent by the remote terminal device is not the connection request.

At step S603, in response to the connection request sent by the another remote terminal device being received during the operation of the timer, the notification message is sent to the another remote terminal device.

For example, when the relay terminal device receives the connection request sent by another remote terminal device during the operation of the prohibit timer or T302 timer, as the relay terminal device is currently in an access failure state, the relay terminal device does not need to perform another access control, but may directly send the notification message to the another remote terminal device, directly informing the another remote terminal device that the relay terminal device has failed to access at this time.

By implementing the embodiments of the present disclosure, when the relay terminal device receives the connection request sent from another remote terminal device during the operation of the timer, the notification message can be directly sent to the another remote terminal device to inform the another remote terminal device that the relay terminal device has failed to access at this time, thereby shortening the wait time of the another remote terminal device and improving the access efficiency.

It can be understood that the above embodiments describe the implementation of the access failure processing method of the embodiments of the present disclosure from the relay terminal device side. The embodiments of the present disclosure also propose another access failure processing method. The implementation of this access failure processing method will be described from the remote terminal device side below. Referring to FIG. 7, FIG. 7 is a flowchart of another access failure processing method provided by an embodiment of the present disclosure. It should be illustrated that the access failure processing method of the embodiments of the present disclosure may be applied to a remote terminal device. As shown in FIG. 7, the access failure processing method may include but is not limited to the following step S701.

At step S701, a notification message sent by a relay terminal device is received. The notification message is sent by the relay terminal device when the relay terminal device performs access operation and an access failure occurs to the relay terminal device, or the notification message is sent by the relay terminal device when the relay terminal device receives during operation of a timer a connection request sent by the remote terminal device.

In an embodiment of the present disclosure, the access operation of the relay terminal device is performed in response to a trigger of an RRC connection establishment of the remote terminal device, an RRC connection resume of the remote terminal device, or an RRC connection reestablishment of the remote terminal device. That is to say, when the connection establishment or connection resume of the relay terminal device is triggered by the connection establishment, connection resume or connection reestablishment of the remote terminal device, the relay terminal device needs to first perform a connection establishment or resume, and then forward the request of the remote terminal device.

In an embodiment of the present disclosure, the above access failure may include, but is not limited to, failing to pass a UAC verification, receiving an RRC reject message sent by a network device, or receiving an RRC release message sent by the network device, etc. In this embodiment, the RRC release message carries a wait timer.

It should be illustrated that, when there is a new access request, the relay terminal device in all states (such as the idle state, the inactive state, etc.) needs to perform a UAC verification. The verification method is to select an access probability based on the access category and access identity corresponding to this access request service, and generate a random number between 0 and 1. If the random number is lower than the access probability, the verification is passed and an access attempt may be initiated to the network device. If the random number is higher than the access probability, the verification is not passed and the relay terminal device starts a prohibit timer. During operation of the inhibit timer, access is prohibited, and at this time it can be determined that an access failure occurs to the relay terminal device. The relay terminal device may find, based on the access category and access identifier, the corresponding access probability and duration of the prohibit timer, and this configuration is sent by broadcasting.

For example, the relay terminal device in the idle state may enter the connection state through receiving an RRC connection establishment sent by the remote terminal device. The relay terminal device in the idle state needs to send an RRC establishment request message to the network device (e.g., the base station), and the RRC establishment request message carries a cause for the connection establishment. This cause may include an emergency call, high priority access, user initiated data, user initiated voice, a user initiated video call, user initiated signaling, paging, etc. The network device determines, based on the cause for the initiation, whether to allow the relay terminal device to establish a connection. If the relay terminal device is allowed to establish the connection, the network device sends an RRC connection message to the relay terminal device, allowing the relay terminal device to enter the connection state. If the relay terminal device is not allowed to establish the connection, the network device sends an RRC reject message to the relay terminal device, keeping the relay terminal device in the idle state, and at this time it can be determined that an access failure occurs to the relay terminal device.

For another example, the relay terminal device in the inactive state may resume an RRC connection through a connection resume process, thus entering the connection state. The relay terminal device needs to send an RRC resume request message to the network device. The RRC resume request message carries a cause for the connection resume. The network device determines, based on the cause for the initiation, whether to allow the relay terminal device to resume a connection. If the relay terminal device is allowed to resume the connection, the network device sends an RRC resume message to the relay terminal device, allowing the relay terminal device to enter the connection state. If the relay terminal device is not allowed to resume the connection, the network device sends an RRC reject message to the relay terminal device, keeping the relay terminal device in the inactive state, and at this time it can be determined that an access failure occurs to the relay terminal device. The network device may also send an RRC release message to the relay terminal device, causing the relay terminal device to enter the idle state, and at this time it can be determined that an access failure occurs to the relay terminal device. The RRC reject message may carry a wait time. After receiving the RRC reject message, the UE starts a T302 timer and prohibits access during the operation of the timer. The wait time may be carried in the RRC release message. After receiving the RRC release message, the UE starts the T302 timer and prohibits access during the operation of the timer.

In this step, when an access failure occurs to the relay terminal device, the relay terminal device may send the notification message to the remote terminal device. The remote terminal device receives the notification message sent by the relay terminal device, and may know, based on the notification message, that an access failure has occurred to the corresponding relay terminal device.

For example, when the relay terminal device receives the connection request sent by another remote terminal device during the operation of the prohibit timer or T302 timer, as the relay terminal device is currently in an access failure state, the relay terminal device does not need to perform another access control, but may directly send the notification message to the another remote terminal device. Therefore, it is also possible that the notification message sent by the remote terminal device in the embodiments of the present disclosure may be sent by the relay terminal device upon receiving the connection request sent by the remote terminal device during the operation of the timer.

In an implementation, the remote terminal device may send an RRC establishment request message, RRC resume request message, or RRC reestablishment request message to the relay terminal device before receiving the notification message sent by the relay terminal device. At this time, the connection establishment or connection resume of the relay terminal device may be triggered, that is, the relay terminal device performs the access operation. When the relay terminal device fails to access, the notification message is sent to the remote terminal device.

Optionally, after receiving the notification message sent by the relay terminal device, the remote terminal device performs one or more of:
entering into RRC establishment failure processing in response to the RRC establishment request message sent by the remote terminal device;
entering into RRC resume failure processing in response to the RRC resume request message sent by the remote terminal device;
reestablishing all established bearer radio link layer control (RLC);
notifying, in response to an RRC connection establishment being requested by a higher layer, the higher layer that access is prohibited;
notifying, in response to a process initiated by the remote terminal device being an RRC establishment process, the higher layer of a connection establishment failure;
discarding, in response to a process initiated by the remote terminal device being an RRC resume process, all secret keys for communication with a network device;
notifying, in response to a process initiated by the remote terminal device being the RRC resume process and the resume being triggered by the higher layer, the higher layer of a connection resume failure;
setting, in response to a process initiated by the remote terminal device being the RRC resume process and the resume being triggered by updating of a radio access network notification area (RNA), a delay for updating the RNA to be true; or
performing relay terminal device reselection.

For example, in response to a message sent by the remote terminal device being the RRC establishment request message, the remote terminal device enters into RRC establishment failure processing after receiving the notification message sent by the relay terminal device. For example, in response to a message sent by the remote terminal device being the RRC resume request message, the remote terminal device enters into RRC resume failure processing after receiving the notification message sent by the relay terminal device.

For another example, the remote terminal device reestablishes all established bearer RLC after receiving the notification message sent by the relay terminal device.

For example, when the RRC connection establishment is requested by the higher layer, the remote terminal device, after receiving the notification message sent by the relay terminal device, notifies the higher layer that access is prohibited. As an example, the notifying the higher layer that the access is prohibited may include notifying the higher layer that access of all access categories is prohibited, or notifying the higher layer that access of all access categories other than access categories 0 and 2 is prohibited. In this embodiment, the RRC connection establishment may be an RRC connection establishment, an RRC connection reestablishment, or an RRC connection resume.

For another example, in response to a process initiated by the remote terminal device being the RRC establishment process, the remote terminal device, after receiving the notification message sent by the relay terminal device, notifies the higher layer of the connection establishment failure. In this embodiment, the determination of the RRC establishment process may be based on the sending of the RRC establishment request message.

For another example, in response to a process initiated by the remote terminal device being the RRC resume process, the remote terminal device, after receiving the notification message sent by the relay terminal device, may discard all secret keys for communication with a network device.

Optionally, in response to a process initiated by the remote terminal device being an RRC resume process and the resume being triggered by the higher layer, the remote terminal device, after receiving the notification message sent by the relay terminal device, notifies the higher layer of the connection resume failure.

Optionally, in response to a process initiated by the remote terminal device being an RRC resume process and the resume being triggered by updating of an RNA, the remote terminal device, after receiving the notification message sent by the relay terminal device, sets a delay for updating the RNA to be true.

Optionally, the remote terminal device performs relay terminal device reselection after receiving the notification message sent by the relay terminal device. That is to say, the remote terminal device performs the relay terminal device reselection immediately after receiving the notification message sent by the relay terminal device, without waiting for the access failure attempt of this relay terminal device, shortening the wait time.

In a possible implementation, after receiving the notification message sent by the relay terminal device, the remote terminal device may determine whether configuration for a duration of a timer exists, and starts the timer in response to the configuration for the duration of the timer existing. Optionally, if the remote terminal device, after receiving the notification message sent by the relay terminal device, determines that no configuration for the duration of the timer exists, for example, the notification message does not carry the duration of the timer, the network device or the relay terminal device does not configure the duration of the timer, and the protocol does not specify the duration of the timer, the remote terminal device does not start the timer. It should be illustrated that in some embodiments, the above duration of the timer may be carried in the above notification message, or configured by a network device, or configured by the relay terminal device, or specified by a protocol, which is not specifically limited by the present disclosure.

That is to say, after receiving the notification message sent by the relay terminal device, the remote terminal device needs to determine whether the configuration for the duration of the timer exists, and the duration of the timer may be carried in the above notification message, or configured by the network device, or configured by the relay terminal device, or specified by the protocol. When the configuration for the duration of the timer exists, the remote terminal device needs to start the timer based on the duration of the timer.

In a possible implementation, after receiving the notification message sent by the relay terminal device and starting the timer, the remote terminal device performs one or more of prohibiting access during operation time of the timer, prohibiting access to a cell via this relay terminal device during the operation time of the timer, or prohibiting selecting this relay terminal device during the operation time of the timer. For example, the notification message carries the duration of the timer, and the remote terminal device, after receiving the notification message sent by the relay terminal device, may start the timer and prohibit access or prohibit access to the cell via this relay terminal device or prohibit selecting this relay terminal device during the operation time of the timer.

Optionally, the above implementation of prohibiting access to the cell via this relay terminal device during the operation time of the timer may include but is not limited to:
prohibiting sending, to this relay terminal device during the operation time of the timer, an RRC establishment request message and/or an RRC resume request message; or
prohibiting sending, to this relay terminal device during the operation time of the timer, a message of a specific bearer.

In a possible implementation, after receiving the notification message sent by the relay terminal device and staring the timer, the remote terminal device performs one or more of:
entering into RRC establishment failure processing in response to the RRC establishment request message sent by the remote terminal device;
entering into RRC resume failure processing in response to the RRC resume request message sent by the remote terminal device;
reestablishing all established bearer RLC;
notifying, in response to an RRC connection establishment being requested by a higher layer, the higher layer that access is prohibited;
notifying, in response to a process initiated by the remote terminal device being an RRC establishment process, the higher layer of a connection establishment failure;
discarding, in response to a process initiated by the remote terminal device being an RRC resume process, all secret keys for communication with a network device;
notifying, in response to a process initiated by the remote terminal device being the RRC resume process and the resume being triggered by the higher layer, the higher layer of a connection resume failure;
setting, in response to a process initiated by the remote terminal device being the RRC resume process and the resume being triggered by updating of an RNA, a delay for updating the RNA to be true;
performing relay terminal device reselection;
prohibiting access during operation time of the timer;
prohibiting access to a cell via the relay terminal device during the operation time of the timer; or
prohibiting selecting the relay terminal device during the operation time of the timer.

Through the embodiments of the present disclosure, the remote terminal device can know, based on the notification sent by the relay terminal device, that an access failure has occurred to the corresponding relay terminal device. Based on the notification, the remote terminal device can perform corresponding operations to cope with the access failure of the relay terminal device, for example, the remote terminal device is prohibited from accessing the relay terminal device for a certain period of time after receiving the notification, for example, the remote terminal device no longer repeatedly sends an access request to the relay terminal device within the period of time, so that unnecessary access attempts may be avoided, thereby contributing to saving resources and avoiding waste of resources. For another example, the remote terminal device performs the relay terminal device reselection after receiving the notification, without waiting for the access failure attempt of this relay terminal device, shortening the wait time, and improving the access efficiency.

In the above embodiments provided by the present disclosure, the methods provided by the embodiments of the present disclosure are introduced from the perspectives of relay terminal device and remote terminal device respectively. In order to achieve the various functions of the methods provided by the embodiments of the present disclosure, the relay terminal device and the remote terminal device may include hardware structures, software modules, or hardware structures plus software modules to achieve the various functions described above. One of the above various functions may be executed in the form of hardware structure, software module, or hardware structure plus software module.

Referring to FIG. 8, FIG. 8 is a schematic structural diagram of an access failure processing apparatus 80 provided by an embodiment of the present disclosure. It should be illustrated that the access failure processing apparatus 80 may be a terminal device (such as a relay terminal device in the aforementioned method embodiments), an apparatus in a terminal device, or an apparatus capable of being used in conjunction with a terminal device.

The access failure processing apparatus 80 shown in FIG. 8 may include a transceiver module 801. The transceiver module 801 may include a sending module and/or a receiving module. The sending module is configured for implementing a sending function, and the receiving module is configured for implementing a receiving function. The transceiver module 801 may implement the sending function and/or the receiving function.

In an embodiment of the present disclosure, the transceiver module 801 is configured to send a notification message to a remote terminal device in response to an access failure of the relay terminal device. In an implementation, access operation of the relay terminal device is performed in response to a trigger of an RRC connection establishment of the remote terminal device, an RRC connection resume of the remote terminal device, or an RRC connection reestablishment of the remote terminal device.

In a possible implementation, the above access failure may include, but is not limited to, failing to pass a UAC verification, receiving an RRC reject message sent by a network device, or receiving an RRC release message sent by the network device, etc. In this embodiment, the RRC release message carries a wait timer.

Optionally, the transceiver module 801 is configured to in response to the access failure of the relay terminal device, start a timer and send the notification message to the remote terminal device. In an implementation, the above notification message carries a duration of the timer. As an example, the access failure is failing to pass a UAC verification, and the timer is a prohibit timer. As another example, the access failure is receiving an RRC reject message or an RRC release message sent by a network device, and the timer is a T302 timer.

In a possible implementation, as shown in FIG. 9, the access failure processing apparatus 90 may further include a processing module 902. The processing module 902 is configured to determine whether a connection request sent by another remote terminal device is received during operation of the timer. The transceiver module 901 is further configured to send, in response to the connection request sent by the another remote terminal device being received during the operation of the timer, the notification message to the another remote terminal device. 901 in FIG. 9 and 801 in FIG. 8 have the same function and structure.

In a possible implementation, an implementation process for the transceiver module 901 to determine whether the connection request sent by the another remote terminal device is received during the operation of the timer may be as follows: determining, in response to receiving data sent by the another remote terminal device during the operation of the timer, whether the data sent by the another remote terminal device is from a specific bearer; and determining, in response to the data sent by the another remote terminal device being from the specific bearer, that the connection request sent by the another remote terminal device is received during the operation of the timer.

With respect to the apparatus in the above embodiments, the specific manner in which each module performs an operation has been described in detail in the embodiments relating to the method, and will not be described in detail herein.

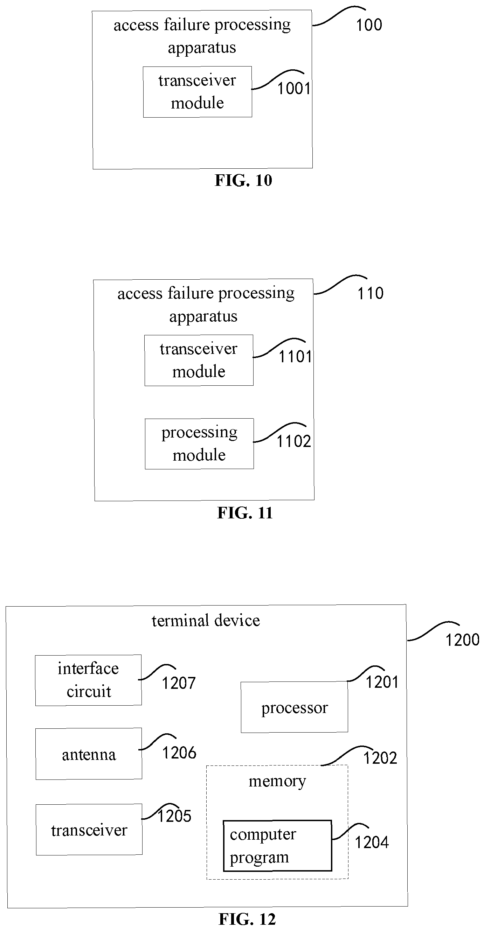

Referring to FIG. 10, FIG. 10 is a schematic structural diagram of another access failure processing apparatus 100 provided by an embodiment of the present disclosure. It should be illustrated that the access failure processing apparatus 100 may be a terminal device (such as a remote terminal device in the aforementioned method embodiments), an apparatus in a terminal device, or an apparatus capable of being used in conjunction with a terminal device.

The access failure processing apparatus 100 shown in FIG. 10 may include a transceiver module 1001. The transceiver module 1001 may include a sending module and/or a receiving module. The sending module is configured for implementing a sending function, and the receiving module is configured for implementing a receiving function. The transceiver module 901 may implement the transmitting function and/or the receiving function.

In an embodiment of the present disclosure, the transceiver module 1001 is configured to receive a notification message sent by a relay terminal device. The notification message is sent by the relay terminal device when the relay terminal device performs access operation and an access failure occurs to the relay terminal device, or the notification message is sent by the relay terminal device when the relay terminal device receives during operation of atimer a connection request sent by the remote terminal device.

In an implementation, as shown in FIG. 11, the access failure processing apparatus 110 may further include a processing module 1102. The processing module 1102 is configured to determine, after receiving the notification message sent by the remote terminal device, whether configuration for a duration of a timer exists, and start the timer in response to the configuration for the duration of the timer existing.

Optionally, the processing module 1102 is further configured to perform, after starting the timer, one or more of prohibiting access during operation time of the timer, prohibiting access to a cell via the relay terminal device during the operation time of the timer, or prohibiting selecting the relay terminal device during the operation time of the timer.

Optionally, an implementation process for the processing module 1102 to prohibit the access to the cell via the relay terminal device during the operation time of the timer may be as follows: prohibiting sending, to the relay terminal device during the operation time of the timer, an RRC establishment request message and/or an RRC resume request message; or prohibiting sending, to the relay terminal device during the operation time of the timer, a message of a specific bearer.

In an embodiment of the present disclosure, the above duration of the timer is carried in the notification message, or is configured by a network device, or is configured by the relay terminal device, or is specified by a protocol.

In an implementation, the transceiver module is further configured to send, to the relay terminal device before receiving the notification message sent by the relay terminal device, an RRC establishment request message, an RRC resume request message, or an RRC reestablishment request message.

Optionally, the processing module is further configured to perform, after the transceiver module receives the notification message sent by the remote terminal device, one or more of:
enter into RRC establishment failure processing in response to the RRC establishment request message sent by the remote terminal device;
enter into RRC resume failure processing in response to the RRC resume request message sent by the remote terminal device;
reestablish all established bearer radio link layer control (RLC);
notify, in response to an RRC connection establishment being requested by a higher layer, the higher layer that access is prohibited;
notify, in response to a process initiated by the remote terminal device being an RRC establishment process, the higher layer of a connection establishment failure;
discard, in response to a process initiated by the remote terminal device being an RRC resume process, all secret keys for communication with a network device;
notify, in response to a process initiated by the remote terminal device being the RRC resume process and the resume being triggered by the higher layer, the higher layer of a connection resume failure;
set, in response to a process initiated by the remote terminal device being the RRC resume process and the resume being triggered by updating of an RNA, a delay for updating the RNA to be true; or
perform relay terminal device reselection.

In an implementation, the processing module notifying the higher layer that the access is prohibited is implemented as follows: notifying the higher layer that access of all access categories is prohibited, or notifying the higher layer that access of all access categories other than access categories 0 and 2 is prohibited.

With respect to the apparatus in the above embodiments, the specific manner in which each module performs an operation has been described in detail in the embodiments relating to the method, and will not be described in detail herein.

Referring to FIG. 12, FIG. 12 is a schematic structural diagram of a terminal device 1200 provided by an embodiment of the present disclosure. The terminal device 1200 may be a terminal device (e.g., a relay terminal device in the aforementioned method embodiments), a remote terminal device in the aforementioned method embodiments, or a chip, a chip system, or a processor, etc., that supports the terminal device to implement the methods described above. The terminal device may be configured to implement the method described in the aforementioned method embodiments. For details, please refer to the illustration in the above method embodiments.

The terminal device 1200 may include one or more processors 1201. The processors 1201 may be a general purpose processor or specialized processor, etc. For example, the processors 1201 may be a baseband processor or central processor. The baseband processor may be configured to process communication protocols and communication data. The central processor may be configured to control a communication device (e.g., a base station, baseband chip, terminal device, terminal device chip, DU or CU, etc.), execute a computer program, and process data of the computer program.

Optionally, the terminal device 1200 may further include one or more memories 1202. The one or more memories 1202 may store a computer program 1204. The processor 1201 executes the computer program 1204 to cause the terminal device 1200 to perform the method described in the above method embodiments. Optionally, the memory 1202 may also store data. The terminal device 1200 and the memory 1202 may be provided separately or may be integrated together.

Optionally, the terminal device 1200 may further include a transceiver 1205 and an antenna 1206. The transceiver 1205 may be referred to as a transceiver unit, a transceiver device, or a transceiver circuit, etc., and is configured to implement the receiving and sending functions. The transceiver 1205 may include a receiver and a sender. The receiver may be referred to as a receiving device or a receiving circuit, etc., and is configured to implement a receiving function. The sender may be referred to as a sending device or a sending circuit, etc., and is configured to implement a sending function.

Optionally, the terminal device 1200 may further include one or more interface circuits 1207. The interface circuit 1207 is configured to receive a code instruction and transmit the code instruction to the processor 1201. The processor 1201 runs the code instruction to cause the terminal device 1200 to perform the method described in the above method embodiments.

The terminal device 1200 is a relay terminal device in the aforementioned method embodiments. The transceiver 1205 is configured to perform the step S401 in FIG. 4, step S501 in FIG. 5, and steps S601 and S603 in FIG. 6. The processor 1201 is configured to perform the step S602 in FIG. 6.

The terminal device 1200 is a remote terminal device in the aforementioned method embodiments. The transceiver 1205 is configured to perform the step S701 in FIG. 7, perform the step of sending to the relay terminal device, before receiving the notification message sent by the relay terminal device, an RRC establishment request message, an RRC resume request message, or an RRC reestablishment request message. The processor 1201 is configured to perform the step of determining, after receiving the notification message, whether configuration for a duration of a timer exists, and starting the timer in response to the configuration for the duration of the timer existing. The processor 1201 is configured to perform the step of performing, after starting the timer, one or more of prohibiting access during operation time of the timer, prohibiting access to a cell via the relay terminal device during the operation time of the timer, or prohibiting selecting the relay terminal device during the operation time of the timer. The processor 1201 is configured to perform the step of prohibiting sending, to the relay terminal device during the operation time of the timer, an RRC establishment request message and/or an RRC resume request message, or prohibiting sending, to the relay terminal device during the operation time of the timer, a message of a specific bearer.

In an implementation, the processor 1201 is configured to perform the step of performing, after the transceiver 1205 receives the notification message, one or more of:
entering into RRC establishment failure processing in response to the RRC establishment request message sent by the remote terminal device;
entering into RRC resume failure processing in response to the RRC resume request message sent by the remote terminal device;
reestablishing all established bearer RLC;
notifying, in response to an RRC connection establishment being requested by a higher layer, the higher layer that access is prohibited;
notifying, in response to a process initiated by the remote terminal device being an RRC establishment process, the higher layer of a connection establishment failure;
discarding, in response to a process initiated by the remote terminal device being an RRC resume process, all secret keys for communication with a network device;
notifying, in response to a process initiated by the remote terminal device being the RRC resume process and the resume being triggered by the higher layer, the higher layer of a connection resume failure;
setting, in response to a process initiated by the remote terminal device being the RRC resume process and the resume being triggered by updating of an RNA, a delay for updating the RNA to be true; or
performing relay terminal device reselection.

Optionally, the processor 1201 is configured to perform the step of notifying the higher layer that access of all access categories is prohibited, or notifying the higher layer that access of all access categories other than access categories 0 and 2 is prohibited.

In an implementation, the processor 1201 may include a transceiver used for implementing the receiving and sending functions. For example, the transceiver may be a transceiver circuit, an interface, or an interface circuit. The transceiver circuit, interface, or interface circuit used for implementing the receiving and sending functions may be separate or may be integrated together. The transceiver circuit, interface, or interface circuit described above may be used for code/data reading and writing, or the transceiver circuit, interface, or interface circuit described above may be used for signal transmission or delivery.

In an implementation, the processor 1201 may store a computer program. The computer program is run on the processor 1201 and may cause the terminal device 1200 to perform the method described in the above method embodiments. The computer program may be solidified in the processor 1201, in which case the processor 1201 may be implemented by hardware.

In an implementation, the terminal device 1200 may include a circuit. The circuit may implement the functions of sending, receiving, or communicating in the aforementioned method embodiments. The processor and transceiver described in the present disclosure may be implemented in an integrated circuit (IC), analog IC, radio frequency integrated circuit (RFIC), mixed signal IC, application specific integrated circuit (ASIC), printed circuit board (PCB), electronic device, etc. The processor and transceiver may also be manufactured by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The terminal device in the description of the above embodiments may be a network device or a terminal device (such as a relay terminal device or a remote terminal device in the aforementioned method embodiments), but the scope of the terminal device described in the present disclosure is not limited thereto. The structure of the terminal device may not be limited by FIG. 12. The terminal device may be an independent device or may be part of a larger device. For example, the described terminal device may be:
(1) an independent integrated circuit (IC), chip, or chip system or subsystem;
(2) a set of one or more ICs, optionally including a storage component used for storing data and computer programs;
(3) an ASIC, such as a modem;
(4) a module that is capable of being embedded in other devices;
(5) a receiving device, terminal device, intelligent terminal device, cellular phone, wireless device, handheld device, mobile unit, in-vehicle device, network device, cloud device, artificial intelligence device, etc.;
(6) others and so on.

Those skilled in the art can also understand that various illustrative logical blocks and steps listed in the embodiments of the present disclosure may be implemented through electronic hardware, computer software, or a combination of the two. Whether such functions are implemented through hardware or software depends on the specific application and design requirements of the overall system. Those skilled in the art can use various methods to implement the described functions for each specific application, but this implementation should not be understood as exceeding the scope of protection of the embodiments of the present disclosure.

The embodiments of the present disclosure also provide an access failure processing system. The access failure processing system includes an access failure processing apparatus, in the above embodiments of FIGS. 8 and 9, as a relay terminal device in the above method embodiments, and an access failure processing apparatus, in the above embodiments of FIGS. 10 and 11, as a remote terminal device in the above method embodiments. Alternatively, the access failure processing system includes a terminal device, in the above embodiments of FIG. 12, as a relay terminal device in the above method embodiments, and a terminal device as a remote terminal device in the above method embodiments.

The present disclosure also provides a readable storage medium. The readable storage medium stores an instruction. The instruction, when executed by a computer, implements the function of any of the method embodiments described above.

The present disclosure also provides a computer program product. The computer program product, when executed by a computer, implements the function of any of the method embodiments described above.

The above embodiments may be implemented in whole or in part by software, hardware, firmware, or any combination thereof. When implemented by using software, the above embodiments may be implemented in whole or in part in the form of a computer program product. The computer program product includes one or more computer programs. When the computer program is loaded and executed on a computer, a process or function is produced in whole or in part in accordance with the embodiments of the present disclosure. The computer may be a general purpose computer, a specialized computer, a computer network, or other programmable devices. The computer program may be stored in a computer-readable storage medium or transmitted from one computer-readable storage medium to another computer-readable storage medium, e.g., the computer program may be transmitted from a web site, computer, server, or data center via a wired (e.g., coaxial cable, fiber optic, digital subscriber line (DSL)) or wireless (e.g., infrared, wireless, microwave, etc.) manner to another website site, computer, server, or data center. The computer-readable storage medium may be any usable medium to which a computer has access, or a data storage device such as a server, data center, etc. containing one or more usable media integration. The usable medium may be a magnetic medium (e.g., floppy disk, hard disk, tape), an optical medium (e.g., a high-density digital video disc (DVD)), or a semiconductor medium (e.g., a solid state disk (SSD)), etc.

Those ordinary skilled in the art can understand that the "first", "second", and other numerical numbers involved in the present disclosure are only for the convenience of description and differentiation, and are not used to limit the scope of the embodiments of the present disclosure or indicate the sequential order.

The "at least one" in the present disclosure may also be described as one or more, and the "plurality" may be two, three, four, or more, without limitation in the present disclosure. In the embodiments of the present disclosure, for one technical feature, the technical features are distinguished by "first", "second", "third", "A", "B", "C", and "D", etc. The technical features described by "first", "second", "third", "A", "B", "C", and "D", etc. are in no order of sequence or size.

The term "and/or" in the embodiments of the present disclosure describes an association relationship of the associated objects, indicating that three kinds of relationships may exist, e.g., A and/or B may indicate A alone, both A and B, and B alone. The character "/" generally indicates that the associated front and rear objects are in an "or" relationship.

The "pre-define" in the present disclosure may be understood as "define", "define in advance", "store", "pre-store", "pre-negotiate", "pre-configure", "solidified", or "pre-fired".

Those ordinary skilled in the art can realize that the units and algorithm steps of each example described in combination with the disclosed embodiments in this article may be implemented in electronic hardware, or a combination of computer software and electronic hardware. Whether these functions are executed in hardware or software depends on the specific application and design constraints of the technical solution. Professional technicians may use different methods to implement the described functions for each specific application, but such implementation should not be considered beyond the scope of the present disclosure.

Those skilled in the art can clearly understand that for the convenience and conciseness of the description, the specific working processes of the systems, apparatus, and units described above may refer to the corresponding processes in the aforementioned method embodiments, and will not be repeated here.

The above is only the detailed description of the present disclosure, but the scope of protection of the present disclosure is not limited to this. Any technician familiar with this technical field can easily think of changes or replacements within the technical scope disclosed in the present disclosure, and these changes or replacements should be covered within the scope of protection of the present disclosure. Therefore, the scope of protection of the present disclosure shall be subject to the scope of protection of the claims.

## Claims

1. An access failure processing method, **characterized in** being applied to a relay terminal device, and comprising:
sending a notification message to a remote terminal device in response to an access failure of the relay terminal device.

2. The method according to claim 1, wherein access operation of the relay terminal device is performed in response to a trigger of a radio resource control (RRC) connection establishment of the remote terminal device, an RRC connection resume of the remote terminal device, or an RRC connection reestablishment of the remote terminal device.

3. The method according to claim 1, wherein the access failure comprises:
failing to pass a unified access control (UAC) verification;
receiving an RRC reject message sent by a network device; or
receiving an RRC release message sent by the network device, wherein the RRC release message carries a wait timer.

4. The method according to claim 1, wherein the sending the notification message to the remote terminal device in response to the access failure of the relay terminal device comprises:
in response to the access failure of the relay terminal device, starting a timer and sending the notification message to the remote terminal device.

5. The method according to claim 4, wherein the notification message carries a duration of the timer.

6. The method according to claim 4 or 5, wherein
the access failure is failing to pass a UAC verification, and the timer is a prohibit timer; or
the access failure is receiving an RRC reject message or an RRC release message sent by a network device, and the timer is a T302 timer.

7. The method according to any one of claims 4-6, further comprising:
determining whether a connection request sent by another remote terminal device is received during operation of the timer; and
sending, in response to the connection request sent by the another remote terminal device being received during the operation of the timer, the notification message to the another remote terminal device.

8. The method according to claim 7, wherein the determining whether the connection request sent by the another remote terminal device is received during the operation of the timer comprises:
determining, in response to receiving data sent by the another remote terminal device during the operation of the timer, whether the data sent by the another remote terminal device is from a specific bearer; and
determining, in response to the data sent by the another remote terminal device being from the specific bearer, that the connection request sent by the another remote terminal device is received during the operation of the timer.

9. An access failure processing method, **characterized in** being applied to a remote terminal device, and comprising:
receiving a notification message sent by a relay terminal device, wherein the notification message is sent by the relay terminal device when the relay terminal device performs access operation and an access failure occurs to the relay terminal device, or the notification message is sent by the relay terminal device when the relay terminal device receives during operation of a timer a connection request sent by the remote terminal device.

10. The method according to claim 9, wherein before the receiving the notification message sent by the relay terminal device, the method further comprises:
sending to the relay terminal device an RRC establishment request message, an RRC resume request message, or an RRC reestablishment request message.

11. The method according to claim 10, further comprising:
after receiving the notification message, performing one or more of:
entering into RRC establishment failure processing in response to the RRC establishment request message sent by the remote terminal device;
entering into RRC resume failure processing in response to the RRC resume request message sent by the remote terminal device;
reestablishing all established bearer radio link layer control (RLC);
notifying, in response to an RRC connection establishment being requested by a higher layer, the higher layer that access is prohibited;
notifying, in response to a process initiated by the remote terminal device being an RRC establishment process, the higher layer of a connection establishment failure;
discarding, in response to a process initiated by the remote terminal device being an RRC resume process, all secret keys for communication with a network device;
notifying, in response to a process initiated by the remote terminal device being the RRC resume process and the resume being triggered by the higher layer, the higher layer of a connection resume failure;
setting, in response to a process initiated by the remote terminal device being the RRC resume process and the resume being triggered by updating of a radio access network notification area (RNA), a delay for updating the RNA to be true; or
performing relay terminal device reselection.

12. The method according to claim 11, wherein the notifying the higher layer that the access is prohibited comprises:
notifying the higher layer that access of all access categories is prohibited; or
notifying the higher layer that access of all access categories other than access categories 0 and 2 is prohibited.

13. The method according to any one of claims 9-12, further comprising:
determining, after receiving the notification message, whether configuration for a duration of a timer exists; and
starting the timer in response to the configuration for the duration of the timer existing.

14. The method according to claim 13, further comprising:
after starting the timer, performing one or more of
prohibiting access during operation time of the timer;
prohibiting access to a cell via the relay terminal device during the operation time of the timer; or
prohibiting selecting the relay terminal device during the operation time of the timer.

15. The method according to claim 14, wherein the prohibiting the access to the cell via the relay terminal device during the operation time of the timer comprises:
prohibiting sending, to the relay terminal device during the operation time of the timer, an RRC establishment request message and/or an RRC resume request message; or
prohibiting sending, to the relay terminal device during the operation time of the timer, a message of a specific bearer.

16. The method according to any one of claims 13-15, wherein the duration of the timer is carried in the notification message, or is configured by a network device, or is configured by the relay terminal device, or is specified by a protocol.

17. An access failure processing apparatus, **characterized in** being applied to a relay terminal device, and comprising:
a transceiver module, configured to send a notification message to a remote terminal device in response to an access failure of the relay terminal device.

18. An access failure processing apparatus, **characterized in** being applied to a remote terminal device, and comprising:
a transceiver module, configured to receive a notification message sent by a relay terminal device; wherein the notification message is sent by the relay terminal device when the relay terminal device performs access operation and an access failure occurs, or the notification message is sent by the relay terminal device when the relay terminal device receives a connection request sent by the remote terminal device during operation of a timer.

19. A terminal device, **characterized in** comprising a processor and a memory, wherein the memory sores a computer program, the processor, through executing the computer program stored in the memory, causes the terminal device to perform the method according to any one of claims 1 to 8.

20. A terminal device, **characterized in** comprising a processor and a memory, wherein the memory sores a computer program, the processor, through executing the computer program stored in the memory, causes the terminal device to perform the method according to any one of claims 9 to 16.

21. A computer-readable storage medium, configured to store an instruction, wherein the instruction, when being executed, causes the method according to any one of claims 1 to 8 to be performed.

22. A computer-readable storage medium, configured to store an instruction, wherein the instruction, when being executed, causes the method according to any one of claims 9 to 16 to be performed.
